# EUROPÄISCHE PATENTANMELDUNG

(11) **EP 0 897 825 A1**
(43) Veröffentlichungstag der Anmeldung: **24.02.1999**
(21) Anmeldenummer: 98112818.4
(22) Anmeldetag: 10.07.1998
(51) Int. Cl.: B60L 11/18, B60L 7/22, H01M 8/18

(54) **Brennstoffzellenfahrzeug**

(30) Priorität: 23.07.1997 DE 19731642
(71) Anmelder: DBB Fuel Cell Engines GmbH, 73230 Kirchheim/Teck-Nabern (DE)
(72) Erfinder: Benz, Uwe, 88690 Uhldingen-Mühldorf (DE); Hornburg, Gerald, 89275 Elchingen (DE); Tillmetz, Werner, Dr., 88142 Wasserburg (DE)

(57) **Zusammenfassung**

Die Erfindung bezieht sich auf ein Brennstoffzellenfahrzeug mit einem elektrischen Antriebssystem (36) und einem Brennstoffzellensystem zur Bereitstellung elektrischer Energie für das Antriebssystem (36).

Erfindungsgemäß ist das elektrische Antriebssystem (36) zur Bremsenergierückgewinnung eingerichtet, und es sind Mittel zur direkten Nutzung der rückgewonnenen Bremsenergie in wenigstens einer energieverbrauchenden Komponente (1,9,10) des Brennstoffzellensystems vorgesehen. Diese direkte Bremsenergienutzung im Brennstoffzellensystem erhöht den Energienutzungsgrad, ohne einen separaten Energiezwischenspeicher zur Zwischenspeicherung rückgewonnener Bremsenergie zu benötigen.

Verwendung z.B. im Automobilbau.

## Beschreibung

Die Erfindung bezieht sich auf ein Brennstoffzellenfahrzeug nach dem Oberbegriff des Anspruches 1.

Brennstoffzellenfahrzeuge mit einem elektrischen Antriebssystem und einem Brennstoffzellensystem zur Bereitstellung elektrischer Energie für das Antriebssystem sind allgemein bekannt, wobei das elektrische Antriebssystem typischerweise einen oderer mehrere Elektromotoren aufweist, welche die vom Brennstoffzellensystem erzeugte elektrische Energie in Antriebskräfte für die Fahrzeugräder umsetzen. Häufig umfaßt das Brennstoffsellensystem bekannter Brennstoffzellenfahrzeuge eine Methanolreformierungsanlage, mit welcher Wasserstoff zur Speisung der Brennstoffzellen aus flüssig mitgeführtem Methanol gewonnen wird, so daß auf einen großvolumigen Wasserstoffspeicher verzichtet werden kann. Ein solches Brennstoffzellensystem ist in der Offenlegungsschrift DE 33 45 956 A1 beschrieben. Beim dortigen System sind darüber hinaus Wasserelektrolysemittel vorgesehen, mit denen während Fahrzeugbetriebsphasen mit geringer oder normaler Last ein Teil der vom Brennstoffzellensystem erzeugten Energie zur Elektrolyse von Wasser benutzt wird, wobei der dadurch gewonnene Wasserstoff und Sauerstoff in einem jeweiligen Druckspeicher bevorratet werden. Während Fahrzeugbetriebsphasen mit Spitzenlastbedarf werden dann der gespeicherte Wasserstoff und Sauerstoff den Brennstoffzellen als Reaktionsgase anstelle des Methanolreformatgases und Luft zugeführt, die in den übrigen Betriebsphasen als Reaktionsgase dienen. Der Brennstoffzellenstapel kann dadurch in seiner Größe auf die geringeren Leistungsanforderungen bei Normalbetrieb ausgelegt werden und trotzdem Spitzenleistungsanforderungen erfüllen.

Bei Fahrzeugen mit Hybridantrieb ist bekannt, das elektrische Antriebssystem für eine Rückgewinnung von Bremsenergie einzurichten, indem z.B. eine elektrische Maschine des Antriebsystems wahlweise als Elektromotor und als Generator betrieben wird. In Betriebsphasen, in denen Kräfte auf die Antriebsräder übertragen werden sollen, arbeitet die elektrische Maschine als antreibender Elektromotor, während sie in Bremsphasen als Generator arbeitet, mit dem kinetische Fahrzeugenergie in elektrische Energie rückgewandelt wird. Die auf diese Weise rückgewonnene Bremsenergie wird in einem Energiespeicher, z.B. einem Schwungradspeicher oder einer Pufferbatterie, zwischengespeichert und steht damit wieder als Antriebsenergie zur Verfügung. Ein Hybridantrieb dieses Typs ist in der Offenlegungsschrift DE 41 24 479 A1 beschrieben. Es ist auch bekannt, die rückgewonnene Bremsenergie eines Hybridantriebssystems wahlweise nicht in einen Akkumulator einzuspeisen, sondern direkt zur Speisung von ohnehin vorhandenen elektrischen Verbrauchern, wie Lampen, Lüfter oder Klimaanlagenkompressor, einzusetzen, siehe die Offenlegungsschrift DE 41 42 863 A1.

Ein Brennstoffzellenfahrzeug der eingangs genannten Art ist in der Offenlegungsschrift WO 96/41393 A1 beschrieben. Das dortige Brennstoffzellensystem beinhaltet unter anderem einen Temperierfluidkreislauf zur Regulierung der Temperatur des dortigen Brennstoffzellenstapels. Im Temperierfluidkreislauf befindet sich ein elsktrischer Widerstand, mit dem das Temperierfluid aufgeheizt werden kann. Der Widerstand wird elektrisch über einen Stromversorgungsbus gespeist, in den die vom Brennstoffzellenstapel erzeugte elektrische Energie eingespeist wird und an den über einen Wechselrichter ein elektrischer Fahrzeugantriebsmotor angekoppelt ist. Über den dann als Generator arbeitenden Antriebselektromotor und den Wechselrichter kann Fahrzeugbremsenergie in dem Stromversorgungsbus zurückgespeist und zur Bestromung des Widerstands und damit zur Aufheizung des Temperierfluids genutzt werden, wenn und insoweit Bedarf an einer solchen Temperierfluidaufheizung während einer Bremsphase besteht. Um eine Beheizung des Temperierfluids auch z.B. bei stehendem Fahrzeug zu ermöglichen, ist zusätzlich eine Anschlußöglichkeit des Stromversorgungsbusses an ein externes Stromnetz vorgesehen. Als Brennstoff für den Brennstoffzellenstapel kann Wasserstoff dienen, der beispielsweise aus einer Reformierungseaktion gewonnen wird. Für die Wasserstoffbereitstellung kann z.B. bekanntermaßen eine Methanolreformierungsanlage dienen, und die Sauerstoffversorgung der Brennstoffzellen kann in Form eines mittels eines Kompressors verdichteten, sauerstoffhaltigen Gases erfolgen, siehe den Zeitschriftenaufsatz K.B. Prater, Solid polymer fuel cell developments at Ballard, Journal of Power Sources, 37 (1992), Seite 181.

Der Erfindung liegt als technisches Problem die Bereitstellung eines Brennstoffzellenfahrzeugs der eingangs genannten Art zugrunde, das einen vergleichsweise hohen Energienutzungsgrad besitzt.

Die Erfindung löst dieses Problem durch die Bereitstellung eines Brennstoffzellenfahrzeugs mit den Merkmalen des Anspruchs 1, 2 oder 3. Bei diesem Brennstoffzellenfahrzeug ist das elektrische Antriebssystem zur Bremsenergierückgewinnung eingerichtet, und es sind Mittel vorgesehen, mit denen eine direkte Nutzung der rückgewonnenen Bremsenergie in wenigstens einer energieverbrauchenden Komponente des Brennstoffzellensystems realisiert wird. Auf diese Weise geht die kinetische Fahrzeugenergie während Bremsvorgängen nicht gänzlich verloren, sondern kann wenigstens teilweise in einer energieverbrauchenden Komponente des Brennstoffzellensystems genutzt werden, was den Gesamtenergienutzungsgrad des Fahrzeugs erhöht. Da die rückgewonnene Bremsenergie direkt für das Brennstoffzellensystem genutzt wird, ist kein zusätzlicher Energiezwischenspeicher, z.B. in Form einer Puffer- oder Antriebsbatterie, erforderlich, was zur Gewichtseinsparung beiträgt und eine Bremsenergierückgewinnung problemlos auch für Systeme ohne Antriebsbatterie ermöglicht. Es zeigt sich zudem, daß diese Art der Nutzung der rückgewonnenen Bremsenergie deutlich einfacher und unproblematischer ist als eine theoretisch auch in Betracht kommende Nutzung in Form einer Umkehrung der Brennstoffzellenreaktion, um mit dieser Umkehrreaktion Wasserstoff und Sauerstoff durch Elektrolyse zu erzeugen. Wegen der üblicherweise in den Brennstoffzellen verwendeten Werkstoffe und Katalysatoren erweist sich diese Umkehrreaktion in der Praxis als problematisch.

Beim Fahrzeug nach Anspruch 1 wird rückgewonnene Bremsenergie speziell für einen Kompressor genutzt, mit dem sauerstoffhaltiges Gas, z.B. Luft, für die Brennstoffzellen verdichtet wird. Dabei kann der Kompressor einen integrierten Schwungradspeicher enthalten, der die zugeführte Bremsenergie aufnimmt, oder es ist ein Druckspeicher vorgesehen, in welchem bei Zuführung von rückgewonnener Bremsenergie zum Kompressor zusätzlich verdichtetes Gas zwischengespeichert wird.

Beim Fahrzeug nach Anspruch 2 wird rückgewonnene Bremsenergie speziell zur Zwischenspeicherung von wasserstoffhaltigem Reformatgas genutzt, das von einer Reformierungsreaktoreinheit einer Methanolreformierungsanlage abgegeben wird. Dazu wird ein stromabwärts der Reaktoreinheit vorgesehener Kompressor mit rückgewonnener Bremsenergie betrieben, der dadurch Reformatgas verdichtet, das dann in einem hierzu vorgesehenen Druckspeicher zwischengespeichert wird und für Betriebsphasen mit erhöhtem Leistungsbedarf zur Verfügung steht.

Beim Fahrzeug nach Anspruch 3 wird rückgewonnene Bremsenergie speziell in einer Methanolreformierungsanlage als Teil des Brennstoffzellensystems dadurch genutzt, daß durch einen Verdampfer ein Wasser/Methanol-Gemisch im Überschuß verdampft und der überschüssige Wasser/Methanol-Dampf in einem hierzu vorgesehenen Dampfspeicher zwischengespeichert wird, der zwischem dem Verdampfer und einer nachgeschalteten Reformierungsreaktoreinheit angeordnet ist.

Bei einem nach Anspruch 4 weitergebildeten Fahrzeug wird rückgewonnene Bremsenergie einer Reaktorheizung zugeführt und dazu genutzt, über diese eine Reformierungsreaktoreinheit zusätzlich aufzuheizen, mit der Methanol reformiert wird, um Wasserstoff für die Brennstoffzellen zu gewinnen. Diese Zusatzaufheizung der Reformierungsreaktoreinheit begünstigt die Methanolumsetzung, wobei durch die Wärmekapazität der Reaktoreinheit ein Energiezwischenspeicherungseffekt erzielt wird.

Bei einem nach Anspruch 5 weitergebildeten Fahrzeug wird rückgewonnene Bremsenergie zur zusätzlichen Aufheizung eines Verdampfers einer Methanolreformierungsanlage genutzt, mit dem ein Methanol/Wasser-Gemisch vor Einspeisung in eine Reformierungsreaktoreinheit verdampft wird.

Eine vorteilhafte Ausführungsform der Erfindung ist in den Zeichnungen dargestellt und wird nachfolgend beschrieben.

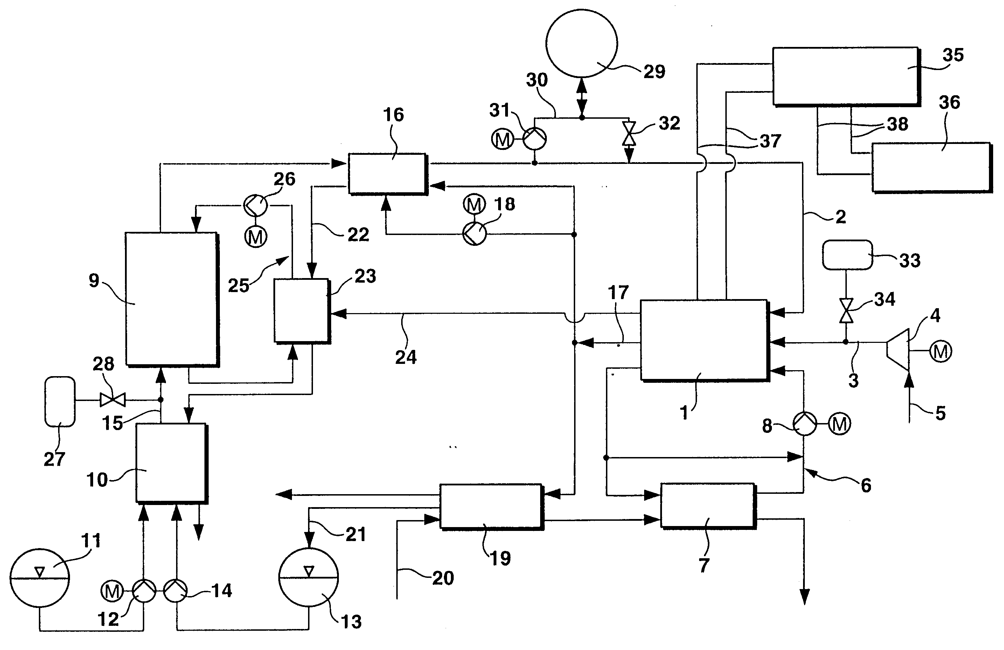

Die einzige Figur zeigt ein Blockdiagramm des erfindungswesentlichen Teils eines Brennstoffzellenfahrzeugs mit einem Brennstoffzellensystem und einem daran angekoppelten elektrischen Antriebssystem.

Das in der Figur dargestellte Brennstoffzellensystem beinhaltet einen Brennstoffzellenstapel 1, dem eingangsseitig über eine Reformatgasleitung 2 ein wasserstoffreiches Reformatgas aus einer Wasserdampfreformierung von Methanol sowie über eine Luftzufuhrleitung 3 verdichtete Luft zuführbar ist, die von einem Kompressor 4 unter Ansaugung eines Frischluftstroms 5 bereitgestellt wird. Ein Ölkühlkreislauf 6 mit einem Kühler 7 und einer Kühlpumpe 8 dient zur Kühlung des Brennstoffzellenstapels 1.

Das Reformatgas wird in einer Methanolreformierungsanlage erzeugt, die Teil des Brennstoffzellensystems ist und als Herzstück eine herkömmliche Reformierungsreaktoreinheit 9 beinhaltet. Der Reaktoreinheit 9 ist ein Verdampfer 10 vorgeschaltet, dem zum einen flüssiges Methanol aus einem Methanoltank 11 über eine Methanol-Dosierpumpe 12 und zum anderen flüssiges Wasser aus einem Wassertank 13 über eine Wasser-Dosierpumpe 14 zugeführt werden und der unter Verdampfung dieser Komponenten ein Wasser/Methanol-Dampfgemisch erzeugt, das über eine Gemischzufuhrleitung 15 in die Reaktoreinheit 9 eingespeist werden kann. Das aus der Reaktoreinheit 9 austretende Reformatgas, das einen für die Brennstoffzellen schädlichen Anteil an Kohlenmonoxid enthalten kann, wird einer CO-Oxidationsstufe 16 zugeführt, die das Kohlenmonoxid exotherm zu Kohlendioxid oxidiert. Zur Bereitstellung des hierfür erforderlichen Sauerstoffs wird ein erster Teil des Kathoden-Abgasstroms 17 aus dem Brennstoffzellenstapel 1 in die CO-Oxidationsstufe 16 eingespeist, wobei zur Mengensteuerung eine Dosierpumpe 18 vorgesehen ist. Ein zweiter Teil des Kathoden-Abgasstroms 17 wird als Wärmeübertragermedium durch die CO-Oxidationsstufe 16 hindurchgeführt und nimmt die Oxidationswärme auf, wozu die CO-Oxidationsstufe 16 einen geeigneten Wärmeübertrageraufbau besitzt. Ein dritter Teil des Kathoden-Abgasstroms 17 wird über einen Kondensator 19 geführt, der andererseits von einem Kühlluftstrom 20 beaufschlagt wird, welcher anschließend auch als Kühlmedium für den Kühler 7 dient. Im Kondensator 19 kondensiert das im zugeführten Kathoden-Abgas enthaltene Wasser, das dann über eine Kondensatleitung 21 in den Wassertank 12 zurückgeführt wird. Das im Kondensator 19 abgekühlte Kathoden-Abgas wird als Abluft abgegeben.

Der in der CO-Oxidationsstufe 16 mit der Oxidationswärme erhitzte Teil des Kathoden-Abgases wird über eine Kathodenabgas-Speiseleitung 22 einem katalytischen Heizer 23 zugeführt, dem andererseits über eine Anodenabgas-Speiseleitung 24 der Anoden-Abgasstrom aus des Brennstoffzellenstapel 1 zugeführt wird. In dem katalytischen Heizer 23 wird unter der Wirkung eines geeigneten Katalysatormaterials ein katalytischer Verbrennungsprozeß der Anoden-Abgaskomponente mit der an der CO-Oxidationsstufe 16 erhitzten Kathoden-Abgaskomponente durchgeführt. Der Heizer 23 besitzt eine Wärmeübertragerstruktur und bildet einen Teil eines Ölheizkreislaufs 25 zur Beheizung der Reformierungsreaktoreinheit 9. Dazu wird das Öl im Heizer 23 durch die Verbrennungswärme des katalytischen Verbrennungsprozesses aufgeheizt und mittels einer Zirkulationspumpe 26 der Reformierungsreaktoreinheit 9 zugeführt, um diese auf eine zur Durchführung der Reformierungsreaktion geeignete Temperatur aufzuheizen. Zu diesem Zweck beinhaltet auch die Reaktoreinheit 9 in herkömmlicher Weise eine Wärmeübertragerstruktur, bei der ein oder mehrere, vom Wärmeöl durchflossene Heizkanäle durch wärmeleitfähige Wände von einem ein- oder mehrteiligen, mit geeignetem Katalysatormaterial befüllten Reaktionsraum getrennt sind. Das aus der Reaktoreinheit 9 austretende, abgekühlte Wärmeöl zirkuliert dann wieder in den Heizer 23 zurück. Das heiße, aus dem katalytischen Heizer 23 austretende Verbrennungsgas wird als Heizmedium durch den Verdampfer 10 geführt, wo es die zur Verdampfung des flüssigen Wasser/Methanol-Gemischs benötigte Wärme abgibt, bevor es als Abluft nach außen abgegeben wird. Der Verdampfer 10 besitzt hierzu wiederum eine Warmeübertragerstruktur mit getrennten, in Wärmekontakt stehenden Strömungskanälen für das heiße Verbrennungsgas einerseits und das Wasser/Methanol-Gemisch andererseits.

Weitere Komponenten des Brennstoffzellensystems dienen insbesondere der direkten Bremsenergierückgewinnung. So ist ein an die Gemischzufuhrleitung 15 zwischen Verdampfer 10 und Reaktoreinheit 9 über ein ansteuerbares Ventil 28 angekoppelter Wasser/Methanol-Dampfspeicher 27 vorgesehen, in welchem überschüssiger Wasser/Methanol-Dampf zwischengespeichert werden kann. In analoger Weise kann das aus der CO-Oxidationsstufe 16 austretende, im wesentlichen aus Wasserstoff sowie einem geringen Anteil Kohlendioxid bestehende Reformatgas in einem Reformatgas-Druckspeicher 29 in verdichteter Form zwischengespeichert werden, der über eine Abzweigleitung 30 an die Reformatgasleitung 2 angeschlossen ist. In der Abzweigleitung 30 befindet sich zufuhrseitig ein Kompressor 31 zur Verdichtung von zwischenzuspeicherndem Reformatgas und abflußseitig ein ansteuerbares Ventil 32, über das zwischengespeichertes, verdichtetes Reformatgas aus dem Druckspeicher 29 dosiert in die Reformatgasleitung 2 zurückgespeist werden kann. Zusätzlich besteht die Möglichkeit einer Zwischenspeicherung von verdichteter Luft vor der Eintrittsseite des Brennstoffzellenstapels 1, wozu ein entsprechender Druckluftspeicher 33 über ein ansteuerbares Ventil 34 an die vom Frischluft-Kompressor 4 zum Brennstoffzellenstapel 1 führende Luftzufuhrleitung 3 angeschlossen ist. Zusätzlich oder alternativ zu dieser Druckluftzwischenspeicherung kann der Frischluft-Kompressor einen integrierten Schwungradspeicher zur Energiezwischenspeicherung beinhalten.

Das Brennstoffzellensystem wird durch eine zentrale Systemsteuerung 35 gesteuert, wobei nachfolgend nur auf die im Zusammenhang mit der beim vorliegenden Fahrzeug realisierten Bremsenergierückgewinnung relevanten Steuerungsmaßnahmen eingegangen wird, während die Steuerung im übrigen in einer herkömmlichen Weise erfolgt, wobei der Übersichtlichkeit halber auch die zugehörigen Steuerleitungen weggelassen sind. Insbesondere dient die Systemsteuerung 35 auch als Schnittstelle zwischen dem Brennstoffzellenstapel 1 und einem herkömmlichen elektrischen Antriebssystem 36, das einen oder mehrere, auf die Antriebsräder des Fahrzeugs wirkende Elektromotoren aufweist. Die Antriebselektromotoren werden während aktiver Antriebsphasen von der vom Brennstoffstapel 1 erzeugten elektrischen Energie gespeist, die über entsprechende elektrische Verbindungsleitungen 37, 38 vom Brennstoffzellenstapel 1 der Systemsteuerung 35 und von dort dem elektrischen Antriebssystem 36 zugeführt wird.

Charakteristisch ist nun die Betriebsweise des Fahrzeugs während Bremsphasen, in denen kinetische Fahrzeugenergie rückgewonnen und direkt in einer oder mehreren energieverbrauchenden Komponenten des Brennstoffzellensystems genutzt wird. Dazu ist das elektrische Antriebssytem 36 zur Bremsenergierückgewinnung eingerichtet, wie dies z.B. von Hybridantrieben bekannt ist. Speziell kann dies dadurch realisiert sein, daß als Antriebselektromotor eine elektrische Maschine verwendet wird, die während Bremsphasen als Generator fungiert und auf diese Weise über die entsprechende Verbindungsleitung 38 elektrische Energie in die Systemsteuerung 35 zurückspeist. Die Systemsteuerung 35 leitet die rückgespeiste Bremsenergie direkt bestimmten energieverbrauchenden Komponenten des Brennstoffzellensystems zur Nutzung zu, ohne daß diese Energie in einer separaten Pufferbatterie oder dergleichen zwischengespeichert werden muß. Für diese direkte Nutzung rückgewonnener Bremsenergie bestehen im vorliegenden Brennstoffzellensysstem mehrere Möglichkeiten, von denen jeweils eine oder mehrere von der Systemsteuerung 35 je nach Systemzustand ergriffen werden.

Eine erste Möglichkeit besteht darin, die Reformierungsreaktoreinheit 9 zusätzlich mit rückgewonnener Bremsenergie aufzuheizen und dadurch deren Temperatur zur Durchführung der endothermen Methanolreformierungsreaktion zu steigern, z.B. von ca. 250°C auf ca. 300°C. Dies kann beispielsweise über eine nicht gezeigte, direkte elektrische Beheizung der Reaktoreinheit 9 oder dadurch erfolgen, daß die Systemsteuerung 35 ein dem Ölheizkreislauf 25 zugeordnetes, elektrisches Heizelement 39 sowie die Zirkulationspumpe 26 mit der rückgewonnenen Bremsenergie betreibt. Durch die Wärmekapazität der Reaktoreinheit 9 kann diese die zugeführte, rückgewonnene Bremsenergie direkt aufnehmen, wobei die erhöhte Reaktortemperatur die Methanolumsetzung begünstigt. Bei Beheizung des Ölheizkreislaufs 25 wirkt zudem das Wärmeöl als thermischer Zwischenspeicher.

Eine zweite Möglichkeit besteht darin, daß die Systemsteuerung 35 mit rückgewonnener Bremsenergie eine zusätzliche Aufheizung des Verdampfers 10 vornimmt, wozu am Verdampfer 10 beispielsweise eine elektrische Zusatzheizung 40 vorgesehen sein kann. Alternativ kann für die Zusatzbeheizung des Verdampfers 10 auch ein Ölheizkreislauf vorgesehen sein, wobei dann dessen Wärmekapazität zusätzlich zu derjenigen des Verdampfers 10 als thermischer Zwischenspeicher wirkt. Die Aufheizung des Verdampfers 10 kann z.B. von ca. 200°C auf ca. 250°C erfolgen.

Gemäß einer dritten Nutzungsmöglichkeit veranlaßt die Systemsteuerung 35 das Verdampfen des dem Verdampfer 10 zugeführten Wasser/Methanol-Gemisches im Überschuß und das Speichern des überschüssig bereitgestellten Wasser/Methanol-Dampfs im Wasser/Methanol-Dampfspeicher 27. Durch entsprechende Ansteuerung des zugehörigen Ventils 28 kann dann nach beendetem Bremsvorgang der zwischengespeicherte Dampf sukzessive in die Reaktoreinheit 9 eingeleitet werden.

Eine vierte Nutzungsmöglichkeit der rückgewonnenen Bremsenergie im Brennstoffzellensystem besteht darin, daß die Systemsteuerung 35 den Frischluft-Kompressor 4 mit rückgewonnener Bremsenergie betreibt und die dadurch zusätzlich bereitgestellte, verdichtete Luft unter hohem Druck im Druckluftspeicher 33 zwischenspeichert. Diese kann dann nach beendetem Bremsvorgang sukzessive durch entsprechende Ansteuerung des zugehörigen Ventils 34 in den Brennstoffzellenstapel 1 eingeleitet werden. Wenn der Kompressor 4 über einen integrierten Schwungradspeicher verfügt, vermag dieser zusätzlich oder alternativ zur Erzeugung zusätzlicher Druckluft die am Kompressor 4 zugeführte Bremsenergie aufzunehmen.

Eine fünfte Nutzungsmöglichkeit für rückgewonnene Bremsenergie im Brennstoffzellensystem besteht darin, daß die Systemsteuerung 35 den Reformatgas-Kompressor 31 mit rückgewonnener Bremsenergie betreibt, wodurch verdichtetes, im wesentlichen aus Wasserstoff bestehendes Reformatgas unter erhöhtem Druck im Reformatgas-Druckspeicher 29 zwischengespeichert wird. Dieses kann dann nach beendetem Bremsvorgang sukzessive wieder in die Reformatgasleitung 2 und damit in den Brennstoffzellenstapel 1 eingespeist werden.

Aus der obigen Beschreibung eines vorteilhaften Beispiels der Erfindung wird deutlich, daß bei dem erfindungsgemäßen Brennstoffzellenfahrzeug durch direkte Nutzung rückgewonnener Bremsenergie im Brennstoffzellensystem ein hoher Energieausnutzungsgrad erzielt wird. Dabei kann je nach Situation von den fünf oben erörterten Nutzungsmöglichkeiten eine oder eine beliebige Kombination derselben Anwendung finden. Außerdem kann rückgewonnene Bremsenergie selbstverständlich auch noch in anderer Weise eine oder mehreren energieverbrauchenden Komponenten des jeweiligen Brennstoffzellensystems zur direkten Nutzung zugeführt werden. Außerdem kommt anstelle der beschriebenen Rückgewinnung von Bremsenergie in Form von elektrischer Energie eine solche in Form von beim Bremsen anfallender Wärmeenergie in Betracht, die dann direkt in einer wärmeaufnehmenden Komponente des Brennstoffzellensystems genutzt werden kann.

## Patentansprüche

1. Brennstoffzellenfahrzeug mit
- einem elektrischen Antriebssystem (36), das zur Bremsenergierückgewinnung eingerichtet ist,
- einem Brennstoffzellensystem zur Bereitstellung elektrischer Energie für Gas Antriebssystem und
- Mitteln zur direkten Nutzung rückgewonnener Bremsenergie in wenigstens einer energieverbrauchenden Komponente des Brennstoffzellensystems,
**dadurch gekennzeichnet**, **daß**
- das Brennstoffzellensystem einen Kompressor (4) zur Verdichtung von sauerstoffhaltigem Gas für die Brennstoffzellen beinhaltet und
- die Bremsenergienutzungsmittel einen in den Kompressor integrierten Schwungradspeicher und/oder einen an den Kompressorauslaß angeschlossenen Druckspeicher (33) für zusätzlich vom Kompressor durch Nutzung rückgewonnener Bremsenergie verdichtetes, sauerstoffhaltiges Gas umfassen.

2. Brennstoffzellenfahrzeug, insbesondere nach Anspruch 1, mit
- einem elektrischen Antriebssystem (36), das zur Bremsenergierückgewinnung eingerichtet ist,
- einem Brennstoffzellensystem zur Bereitstellung elektrischer Energie für das Antriebssystem und
- Mitteln zur direkten Nutzung rückgewonnener Bremsenergie in wenigstens einer energieverbrauchenden Komponente des Brennstoffzellensystems,
**dadurch gekennzeichnet, daß**
- das Brennstoffzellensystem eine Methanolreformierungsanlage mit einer Reformierungsreaktoreinheit (9) umfaßt und
- die Bremsenergienutzungsmittel einen stromabwärts der Reformierungsreaktoreinheit angeordneten, mit rückgewonnener Bremsenergie betreibbaren Reformatgas-Kompressor (31) und einen Reformatgas-Druckspeicher (29) zur Zwischenspeicherung von vom Reformatgas-Kompressor verdichtetem Reformatgas beinhalten.

3. Brennstoffzellenfahrzeug, insbesondere nach Anspruch 1 oder 2, mit
- einem elektrischen Antriebssystem (36), das zur Bremsenergierückgewinnung eingerichtet ist,
- einem Brennstoffzellensystem zur Bereitstellung elektrischer Energie für das Antriebssystem und
- Mitteln zur direkten Nutzung rückgewonnener Bremsenergie in wenigstens einer energieverbrauchenden Komponente des Brennstoffzellensystems,
**dadurch gekennzeichnet, daß**
- das Brennstoffzellensystem eine Methanolreformierungsanlage mit einer Reformierungsreaktoreinheit (9) und einem dieser vorgeschalteten Wasser/Methanol-Verdampfer (10) umfaßt und
- die Bremsenergienutzungsmittel einen an den Verdampferauslaß angeschlossenen Wasser/Methanol-Dampfspeicher (27) und Mittel (35) zum Betrieb des Verdampfers (10) mit rückgewonnener Bremsenergie zur Erzeugung von überschüssigem, im Wasser/Methanol-Dampfspeicher zwischengespeichertem Wasser/Methanol-Dampf beinhalten.

4. Brennstoffzellenfahrzeug nach einem der Ansprüche 1 bis 3, weiter
**dadurch gekennzeichnet, daß**
- das Brennstoffzellensystem eine Methanolreformierungsanlage mit einer Reformierungsreaktoreinheit (9) und einer Reaktorheizung (23, 25) umfaßt und
- die Bremsenergienutzungsmittel Mittel (35, 39) beinhalten, welche rückgewonnene Bremsenergie der Reaktorheizung zur zusätzlichen Aufheizung der Reformierungsreaktoreinheit zuführen.

5. Brennstoffzellenfahrzeug nach einem der Ansprüche 1 bis 4, weiter
**dadurch gekennzeichnet, daß**
- das Brennstoffzellensystem eine Methanolreformierungsanlage mit einer Reformierungsreaktoreinheit (9) und einem dieser vorgeschalteten Wasser/Methanol-Verdampfer (10) umfaßt und
- die Bremsenergienutzungsmittel Mittel (35, 40) zur zusätzlichen Aufheizung des Verdampfers (10) mittels rückgewonnener Bremsenergie beinhalten.
